# EUROPEAN PATENT APPLICATION

(11) **EP 2 523 104 A1**
(43) Date of publication of application: **14.11.2012**
(21) Application number: 12166364.5
(22) Date of filing: 02.05.2012
(51) Int. Cl.: G06F 9/44, G06F 3/023

(54) **Methods and systems for processing multi-language input on a mobile device**

(30) Priority: 13.05.2011 US 201113107712
(71) Applicant: Research In Motion Limited, Waterloo, ON N2L 3W8 (CA)
(72) Inventor: Shelley, Gabriel Lee Gilbert, Waterloo, Ontario N2L 3W8 (CA); Fux, Vadim, Waterloo, Ontario N2K 3P5 (CA); Elizarov, Michael, Waterloo, Ontario N2L 3W8 (CA); Koo, Timothy, Waterloo, Ontario N2L 3W8 (CA); Nanda Gilani, Parul, Mississauga, Ontario L5R 0B4 (CA)
(74) Representative: Moore, Barry

(57) **Abstract**

A method and mobile device are provided for inputting text. In one implementation, a method is provided for associating a first language with a first text input apparatus of the mobile device. The method further associates a second language, different from the first language, with a second text input apparatus of the mobile device. The method also enables text input from the first text input apparatus in the first language and from the second text input apparatus in the second language.

## Description

### BACKGROUND

### I. Technical Field

The embodiments described herein relate to text input for portable electronic devices, and more particularly to methods for processing input from a touchscreen display associated with a first language and input from a physical keyboard associated with a second language.

### II. Background Information

Electronic devices, including portable electronic devices, have gained widespread use and may provide a variety of functions including, for example, telephonic, electronic text messaging and other personal information manager (PIM) application functions. Portable electronic devices can include several types of devices including mobile stations such as cellular phones, smart phones, Personal Digital Assistants (PDAs), tablets and laptop computers.

Devices such as PDAs or smart phones are generally desirable due to portability of the devices, as well as for the convenience of handheld use. Touchscreen devices constructed of a display with a touch-sensitive overlay are useful as such handheld devices are typically smaller in size and easily transportable. Further, the screen content on the touchscreen devices can normally be modified depending on the functions and operations being performed.

However, conventional touchscreen devices provide limited methods of receiving input from users, particularly with respect to input in multiple languages. Accordingly, existing text entry abilities on such devices suffer from drawbacks that limit their efficiency and usefulness.

### BRIEF DESCRIPTION OF THE DRAWINGS

The accompanying drawings, which are incorporated in and constitute a part of this disclosure, illustrate various embodiments. In the drawings:

FIG. 1 is a simplified block diagram of components including internal components of a portable electronic device in which methods and systems consistent with the present disclosure are implemented;

FIG. 2 is a first side view of an example portable electronic device shown in a closed position, in which methods and systems consistent with the present disclosure are implemented;

FIG. 3 is a front view of the portable electronic device of FIG. 2;

FIG. 4 is a second side view of the portable electronic device of FIG. 2;

FIG. 5 is a back view of the portable electronic device of FIG. 2;

FIG. 6 is a first side view of the portable electronic device of FIG. 2 shown in an open position, in which methods and systems consistent with the present disclosure are implemented;

FIG. 7 is a front view of the portable electronic device of FIG. 6;

FIG. 8 is a second side view of the portable electronic device of FIG. 6;

FIG. 9 is a back view of the portable electronic device of FIG. 6;

FIG. 10 illustrates an example screen showing an example input device of the portable electronic device of FIG. 2 in accordance with certain aspects of the present disclosure;

FIG. 11 illustrates an example screen showing a user interface providing menu options for the portable electronic device of FIG. 2 in accordance with certain aspects of the present disclosure;

FIG. 12 illustrates an example screen showing a user interface providing language selection options for the portable electronic device of FIG. 2 in accordance with certain aspects of the present disclosure;

FIG. 13 is a flow diagram of an example method for enabling text input from a first text input apparatus and a second text input apparatus; and

FIG. 14 is a front view of a portable electronic device in an alternative embodiment, in which methods and systems consistent with the present disclosure are implemented.

### DETAILED DESCRIPTION

In one disclosed embodiment, a computer-implemented method is provided. The method includes associating a first language with a first text input apparatus of a mobile device. The method further associates a second language, different from the first language, with a second text input apparatus of the device. The method also enables text input from the first text input apparatus in the first language and from the second text input apparatus in the second language.

In another disclosed embodiment, a computer-readable storage medium that stores program instructions implements the above-described method.

In yet another disclosed embodiment, a mobile device is provided. The mobile device includes a first text input apparatus of the mobile device associated with a first language. The mobile device also includes a second text input apparatus of the mobile device associated with a second language different from the first language. The mobile device further includes a memory storing instructions for processing of text input. The mobile device further includes a processor for executing the instructions to enable text input from the first text input apparatus in the first language and from the second text input apparatus in the second language.

The following detailed description refers to the accompanying drawings. Wherever possible, the same reference numbers are used in the drawings and the following description to refer to the same or similar parts. While several example embodiments are described herein, modifications, adaptations and other implementations are possible. For example, substitutions, additions or modifications may be made to the components illustrated in the drawings, and the example methods described herein may be modified by substituting, reordering, or adding steps to the disclosed methods. Accordingly, the foregoing general description and the following detailed description are example and explanatory only and are not limiting. Instead, the proper scope is defined by the appended claims.

The following describes an electronic device that includes a housing, a touchscreen display exposed by a front of the housing for displaying a virtual keyboard, a physical keyboard on a portion of the electronic device, and functional components comprising a memory and a processor, coupled to the memory, the touchscreen display, and the physical keyboard. Furthermore, text entry functions associated with the electronic device via the touchscreen display and the physical keyboard are described.

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practiced without these specific details. Furthermore, well-known methods, procedures and components have not been described in detail so as not to obscure the example embodiments described herein.

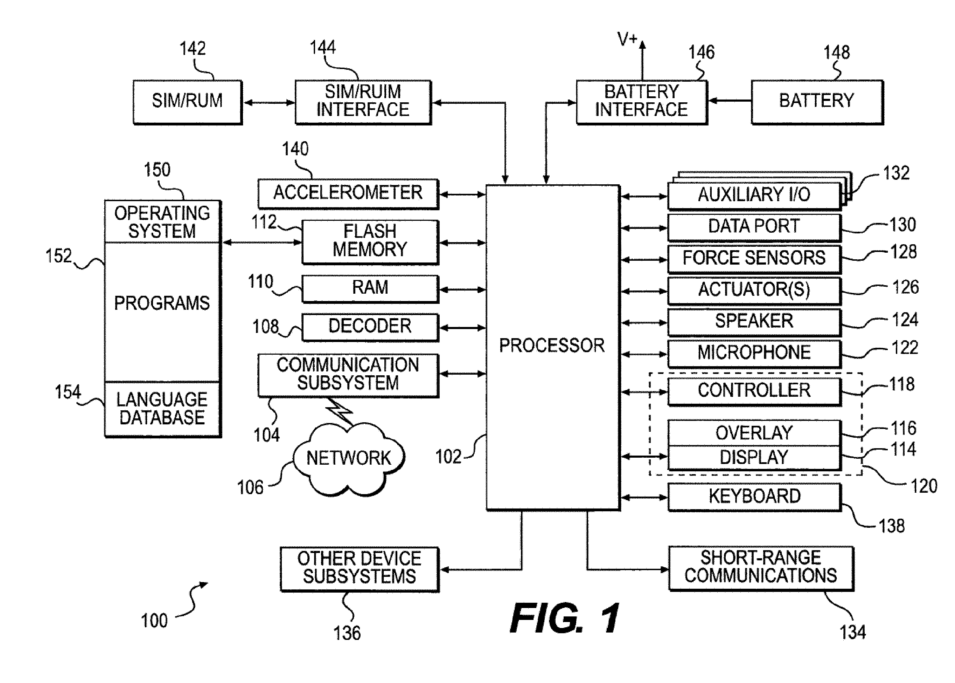

FIG. 1 shows a simplified block diagram of components including internal components of a portable electronic device 100, consistent with disclosed embodiments. Examples of applicable portable electronic devices include simple cellular phones, smart phones, PDAs, tablets, netbooks and laptop computers, or other such communication and computing devices. Although this description refers to use of portable electronic devices, methods and systems consistent with this disclosure can be used with other devices, including devices that are not considered portable.

Portable electronic device 100 includes multiple components such as a processor 102 for controlling the operations of the portable electronic device 100. Communication functions, including data communications, voice communications, or both are performed through a communication subsystem 104. Communication subsystem 104 receives messages from and send messages to a wireless network 106. Data received by the portable electronic device 100 is decompressed and decrypted by a decoder 108.

Wireless network 106 is any type of wireless network, including, but not limited to, data-centric wireless networks, voice-centric wireless networks, and dual-mode networks that support both voice and data communications over the same physical base stations.

Processor 102 also interacts with additional subsystems such as a Random Access Memory (RAM) 110, flash memory 112, display 114 having a touch-sensitive overlay 116 connected to an electronic controller 118 that together comprise a touchscreen display 120, a microphone 122, a speaker 124, an actuator assembly 126, one or more optional force sensors 128, a data port 130, an auxiliary input/output (I/O) subsystem 132, short-range communications unit 134, and other device subsystems 136.

In some embodiments, user-interaction with the graphical user interface is performed through a physical keyboard 138, or through touchscreen display 120. Processor 102 interacts with touch-sensitive overlay 116 via controller 118. Information, such as text, characters, symbols, images, icons, and other items displayed or rendered on a portable electronic device are displayed on touchscreen display 120 via processor 102. According to one embodiment, display 114 is a liquid crystal display (LCD), a Cathode Ray Tube (CRT), a Thin Flat Transistor (TFT) array, an LED display, or any other such display type suitable for use as an output display.

In certain embodiments, touchscreen display 120 utilizes a capacitive touch-sensitive overlay, for example, and a user's touch on touchscreen display 120 is determined according to an X and Y location of the touch, with the X location determined by a signal generated as a result of capacitive coupling with a first touch sensor layer and the Y location determined by the signal generated as a result of capacitive coupling with a second touch sensor layer. Each of the touch-sensor layers provide a signal to controller 118 that represents the respective X and Y touch location values. Thus, in one embodiment, a feature such as a virtual button or virtual keyboard displayed on the touchscreen display is selected by a mapping of the touch location to a feature on touchscreen display 120.

According to one embodiment, processor 102 also interacts with an accelerometer 140. Accelerometer 140 includes a cantilever beam with a proof mass and suitable deflection sensing circuitry. Accelerometer 140 is utilized for detecting direction of gravitational forces or gravity-induced reaction forces, and is used to provide added functionality to portable electronic device 100. Input from the accelerometer 140 is used to control various operations of portable electronic device 100. In alternate embodiments, other motion or direction detection sensors such as gyroscopes, magnetometers, or the like are used to detect motion or orientation of portable electronic device 100.

To identify a subscriber for network access according to one embodiment, portable electronic device 100 uses a Subscriber Identity Module or a Removable User Identity Module (SIM/RUIM) card 142 inserted into a SIM/RUIM interface 144 for communication with a network (such as wireless network 106). Alternatively, user identification information is programmed into flash memory 112 or performed using other techniques. According to one embodiment, portable electronic device 100 is a battery-powered device and includes a battery interface 146 for receiving one or more rechargeable batteries 148.

Portable electronic device 100 also includes an operating system 150 and software programs 152 for execution by processor 102. In one embodiment, such an operation system and programs are stored in a persistent non-transitory computer-readable storage medium, such as flash memory 112. However, in another embodiment, the operating system software and software programs are stored in other types of persistent non-transitory computer-readable storage mediums such as read-only memory (ROM), electrically erasable programmable read-only memory (EEPROM), magnetoresistive random access memory (MRAM), hard disks, optical discs, or any other forms of RAM or ROM. In one embodiment, additional programs are loaded onto portable electronic device 100 through wireless network 106, data port 130, auxiliary I/O subsystem 132, short-range communications subsystem 134, or any other suitable device subsystem 136.

In one embodiment, flash memory 112 includes a language database 154 storing a plurality of language definitions for use by operating system 150. Such language definitions are selectable by a user of portable electronic device 100 to place the device into a particular language mode, or to assign a particular language to an input apparatus, such as keyboard 138 and touchscreen display 120. For example, in one embodiment, portable electronic device 100 displays menus and various other text on touchscreen display 120 in the English language. Such language selections are made through a settings menu for portable electronic device 100, which will be described in detail later. Furthermore, in certain embodiments, language definitions are downloadable from a remote server via network 106.

In use, a received signal such as a text message, an e-mail message, web page download, or other such downloadable content is processed by communication subsystem 104 and input to processor 102. Processor 102 then processes the received signal for output to touchscreen display 120 or alternatively to auxiliary I/O subsystem 132. A subscriber also composes data items, such as e-mail messages, for example, which are transmitted over wireless network 106 through communication subsystem 104. For voice communications, the overall operation of the portable electronic device 100 is similar. That is, speaker 124 outputs audible information converted from electrical signals, and microphone 122 converts audible information into electrical signals for processing.

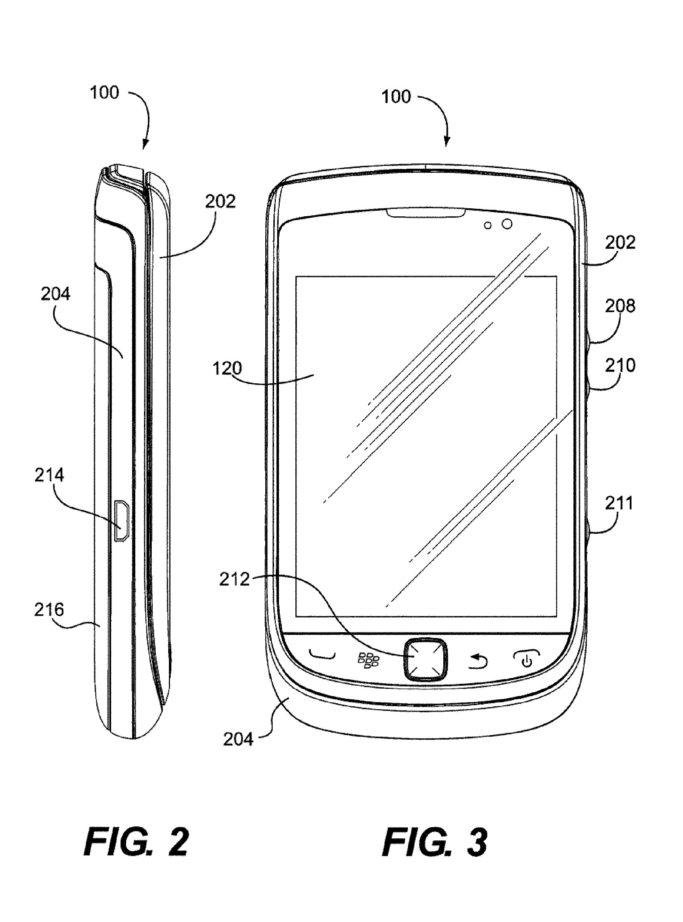

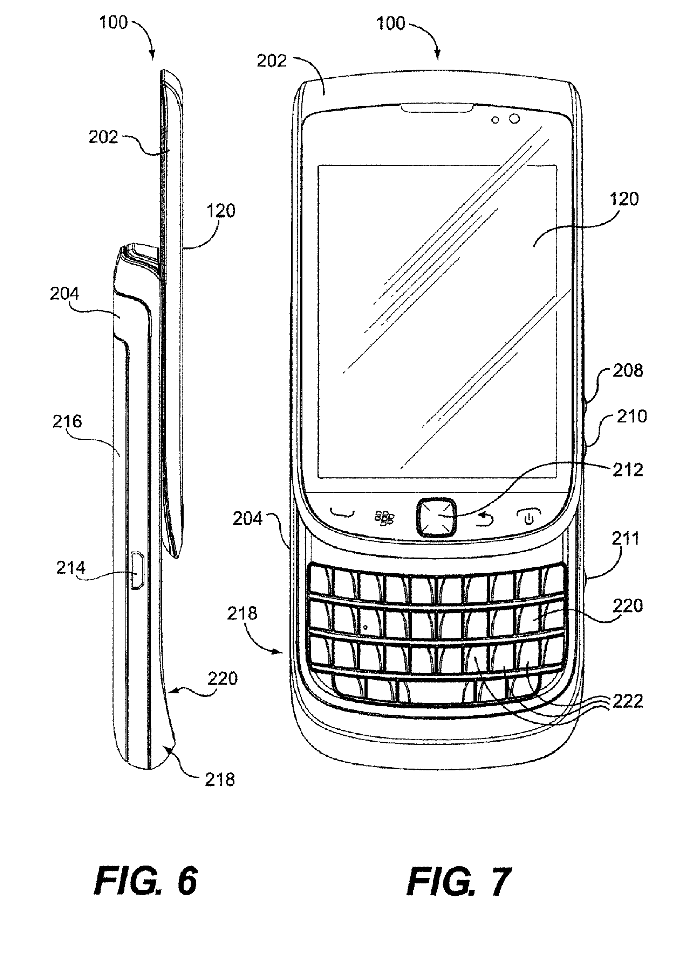

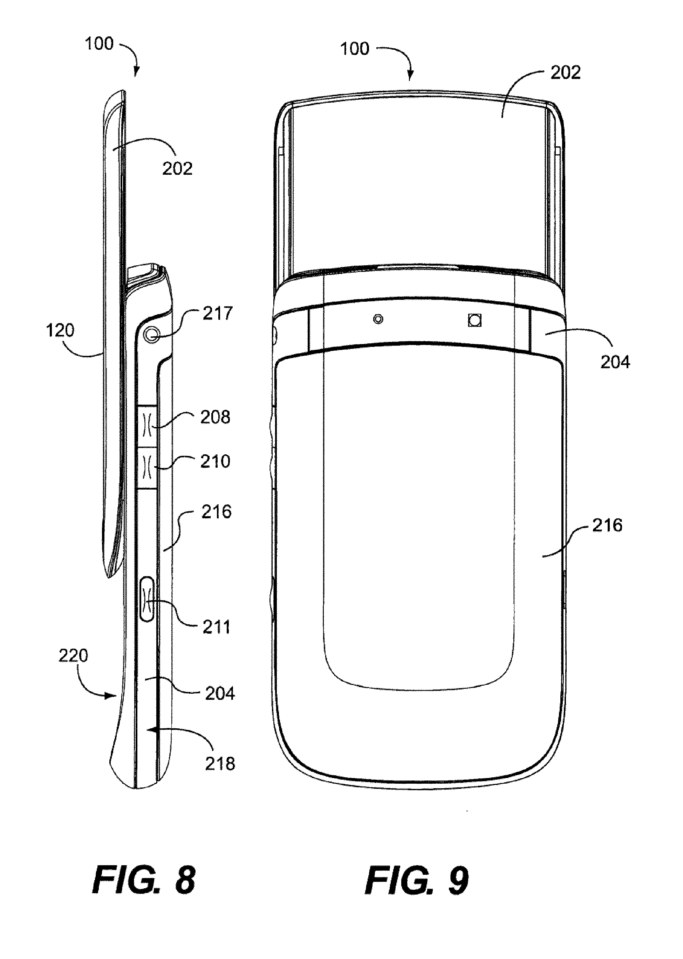

Turning now to FIGS 2-9, illustrated generally therein is a portable electronic device 100. In this embodiment a portable electronic device has two portions, a sliding portion and a base portion. Portable electronic device 100 generally includes a sliding portion 202 (or upper housing) and a base portion 204 (or lower housing). The sliding portion 202 is carried by the base portion 204. Sliding portion 202 and base portion 204 are coupled together and are generally slidable between a closed position (as shown in FIGS. 2-5, for example) and an open position (as shown in FIGS. 6-9, for example). In some example embodiments, device 100 includes a sensor on either or both portions 202, 204, e.g., a contact switch or a magneto switch, that is coupled to the processor 102 and used to determine whether device 100 is in the open or closed position.

Portable electronic device 100 will first be described according to the closed position, and the following discussion refers to numerals displayed in one or more of FIGS. 2-5.

Sliding portion 202 generally includes touchscreen display 120 as generally described above. Touchscreen display 120 operates as a touchscreen input apparatus to thereby enable the input or selection of information by a user's touch, such as by a user's finger. In other example embodiments, an input device such as a stylus is used to input or select information shown on the touchscreen display 120.

Additionally, one or both of the sliding portion 202 and base portion 204 include one or more input apparatuses in addition to touchscreen display 120, such as navigation keys or buttons, a physical or virtual keyboard, a trackpad, a trackball, an optical jogball, multimedia keys, or other such example input devices. For example, sliding portion 202 as shown includes an auxiliary input device 212 in addition to touchscreen display 120. In one embodiment, auxiliary input device 212 is an optical navigation module (e.g. an optical trackpad) that responds to user interaction, and which is used for navigating around display screen 120 to select objects on the display screen, or for other purposes. In certain embodiments, auxiliary input device 212 is a mechanical device that responds to user interaction (e.g. a trackball).

Touchscreen display 120 and auxiliary input device 212 are generally disposed on a front of sliding portion 202 and exposed for user accessibility regardless of whether portable electronic device 100 is in the open or closed positions. The sliding portion 202 also includes other input devices, such as a dedicated phone application button, a dedicated "disconnect call" button, a home screen button, and other such input devices. In certain embodiments, these input devices include optical sensors, mechanical buttons, or both.

Turning now to base portion 204, in one embodiment base portion 204 includes various buttons and other controls, such as buttons 208 and 210. In some embodiments, buttons 208 and 210 are used for navigation, for controlling volume, or for other such control purposes. Base portion 204 also includes one or more application buttons 211 that can be used for example to launch a particular application on portable electronic device 100 (e.g. a camera application, a phone application, etc.). In certain embodiments, a mapping of button 211 to an application is configurable by a user (e.g. the user selects the particular application launched by the button 211).

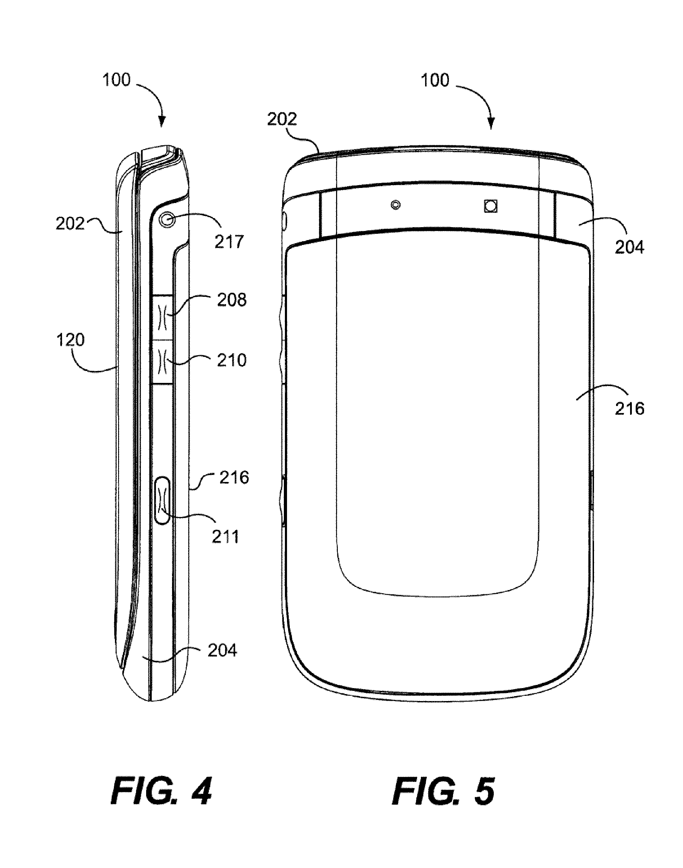

Furthermore, base portion 204 also includes one or more input or output ports, (e.g. I/O ports), such as a microUSB port 214 (and which in one embodiment is similar to or the same as data port 126). In certain embodiments, port 214 is used for data communication with portable electronic device 100, or for charging of a battery (e.g., battery 144, not shown) on device 100. Base portion 204 also includes a battery cover 216 for covering the battery (e.g. battery 144, not shown). In certain embodiments, battery cover 216 is removable. However, it is to be appreciated that in other embodiments, battery cover 216 is permanently fixed to the device. Base portion 204 also includes an audio jack 217 (FIG. 4). Audio jack 217 is be used to couple the portable electronic device 200 to a speaker, a microphone, or both, and is used for voice communication or for listening to music on portable electronic device 100.

Turning now to FIGS. 6 to 9, the portable electronic device 100 will be described according to the open position. Portable electronic device 100 includes physical keyboard (alternatively called a keypad) 138 carried by or positioned on a lower portion 218 of base portion 204. Keyboard 138 generally includes a plurality of alphanumeric keys 222 for inputting data into and otherwise controlling portable electronic device 100. As shown, keys 222 are be positioned in a plurality of rows and columns. In some embodiments, keys 222 represent an alphabet and are arranged with a keyboard layout (e.g. QWERTY, QWERTZ, AZERTY, or Dvorak Simplified Keyboard) or according to other particular patterns.

As shown in FIGS. 2 to 5, when portable electronic device 100 is in the closed position, sliding portion 202 covers keyboard 138. This is beneficial as it protects keyboard 138 when not in use, and also inhibits undesired keys from being pressed when the user is carrying portable electronic device 100 (e.g. in a pocket of clothing). When portable electronic device 100 is in the closed mode, a user can operate portable electronic device 100 and can perform functions on portable electronic device 100 with touchscreen display 120 as the interface, as well as with the accessible input devices on sliding portion 202 (e.g. using buttons 208, 210, 211, or auxiliary input device 212).

When the portable electronic device 100 is in the open position (as shown in FIGS. 6 to 9), keyboard 138 is exposed for additional user accessibility and functionality. For example, some users prefer typing on a physical keyboard rather than utilizing a virtual keyboard displayed on a touchscreen display.

Furthermore, according to an example embodiment, portable electronic device 100 is configured to enable dual-mode entry of text by enabling a user to utilize keyboard 138 for text entry while simultaneously enabling the user to utilize touchscreen display 120 for text entry. For example, in one embodiment, a user activates a virtual keyboard on touchscreen display 120, thereby allowing the user to input text using the virtual keyboard. Similar to keyboard 138, virtual keyboard is configurable to utilize a variety of keyboard layouts (e.g. QWERTY, QWERTZ, AZERTY, or Dvorak Simplified Keyboard) or according to other particular patterns. Additionally, while portable electronic device 100 is in the open position, keyboard 138 is also enabled for text entry. Accordingly, while portable electronic device 100 is in the open position, text input is enabled via both a physical input device, such as keyboard 138, and a virtual keyboard displayed on touchscreen display 120 simultaneously, thereby interspersing text input from both input devices.

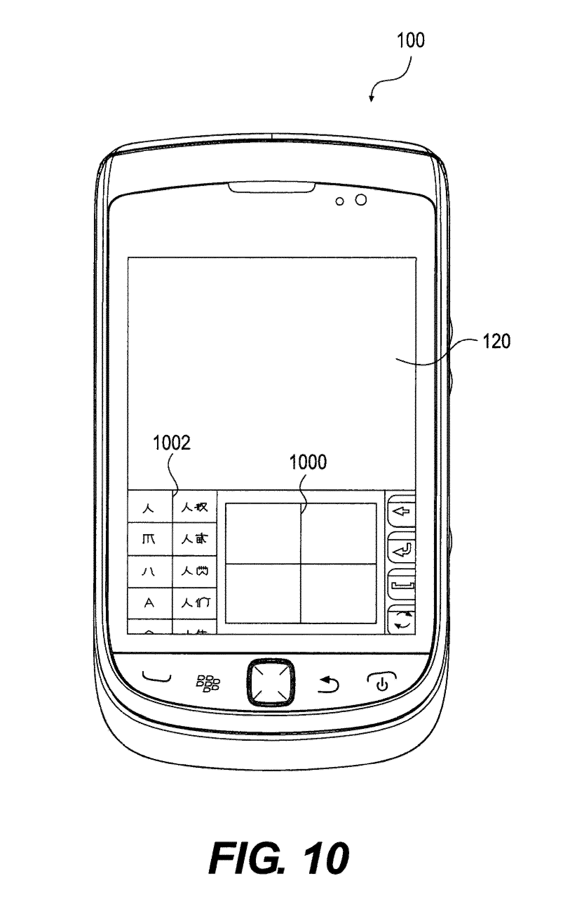

In alternative embodiments, in place of entering text via a virtual keyboard, controller 118 is configured to recognize drawings performed on the surface of touchscreen display 120. For example, in one embodiment shown in FIG. 10, touchscreen display 120 includes a handwriting area 1000, whereby a user is capable of drawing a character on touchscreen display 120 using, for example, the user's finger or a stylus, and controller 118 performs image recognition on the drawn character to convert the drawn character into a corresponding text input.

Alternatively, in another embodiment, a character selection region 1002 is displayed on touchscreen display 120 at the same time as handwriting area 1000, thereby enabling a user to enter, for example, Chinese characters by both handwriting area 1000 and character selection region 1002. Additionally, in another embodiment, keyboard 138 is additionally utilized when portable electronic device 100 is in the open position. Therefore, portable electronic device 100 allows a user to enter text using any of handwriting area 1000, character selection region 1002, and keyboard 138, and can intersperse the various inputs received from the input devices.

Furthermore, according to an example embodiment, by enabling concurrent entry of text from both touchscreen display 120 and keyboard 138, portable electronic device 100 also allows a user to associate particular languages with each of input devices, and concurrently enter text in different languages. In one embodiment, the term "language" is understood to mean a linguistic system governed by grammatical rules combining particular signs or characters with particular meanings. Example languages include, but are not limited to, English, Spanish, French, German, Japanese, Chinese, Russian, Greek, Hebrew or Arabic. However, it is to be appreciated that in other embodiments, languages not fitting the definition of a linguistic system are associated with touchscreen 120 or keyboard 138, such as language assistance devices that provide a user with easy entry of characters and words. For example, a user could associate Pinyin or Canjie with keyboard 138, thereby assisting in the entry of Chinese characters.

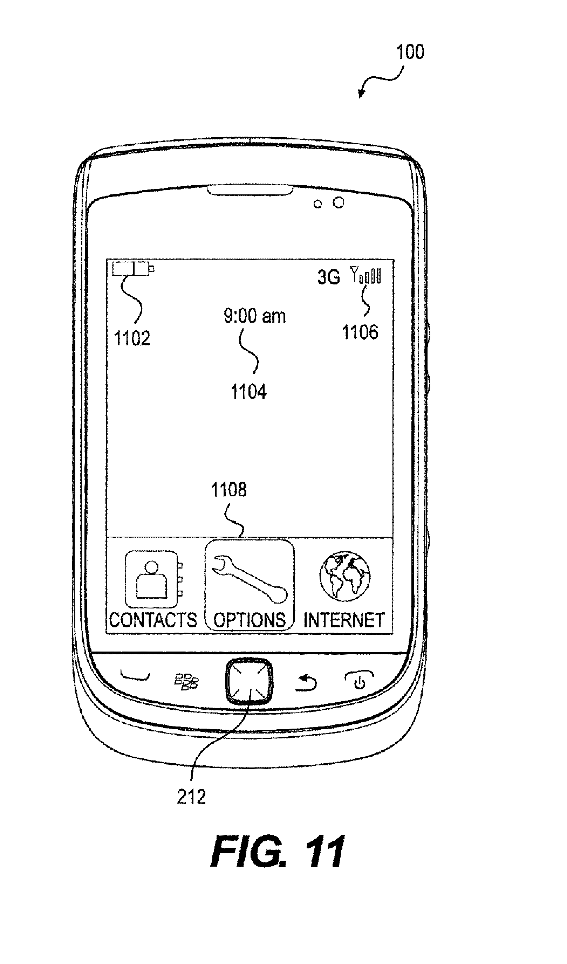

Typically, portable electronic devices provide a user with the ability to select a language setting for the device. Such language settings are often selected through an options menu of portable electronic device 100. For example, FIG. 11 represents an example menu screen graphical user interface (GUI) 1100 displayed on touchscreen display 120. GUI 1100 includes, in certain embodiments, a battery charge indicator 1102, a display clock 1104 updated according to an internal clock (not shown), a data signal indicator 1106, and icons identifying software programs, such as a web browsing application, which provide a user of the portable electronic device with access to the Internet. In one embodiment, such software programs are included in software programs 152 stored in memory 112 of FIG. 1.

Example menu screen GUI 1100 also includes application icons corresponding to utilities, such as a contacts application, or an options application. Each of the displayed application icons are selectable to invoke or launch the respective application by utilizing, for example, touchscreen display 120 to touch the appropriate application, or utilizing auxiliary input device 212 to highlight the appropriate application. For example, as exemplified by options icon 1108, a user desiring to change a language setting chooses to select the options application. Upon receiving input from a user selecting to launch the options application by way of touching the icon on touchscreen display 120, or by way of selecting the application using auxiliary input device 212, an options screen is displayed on touchscreen display 120.

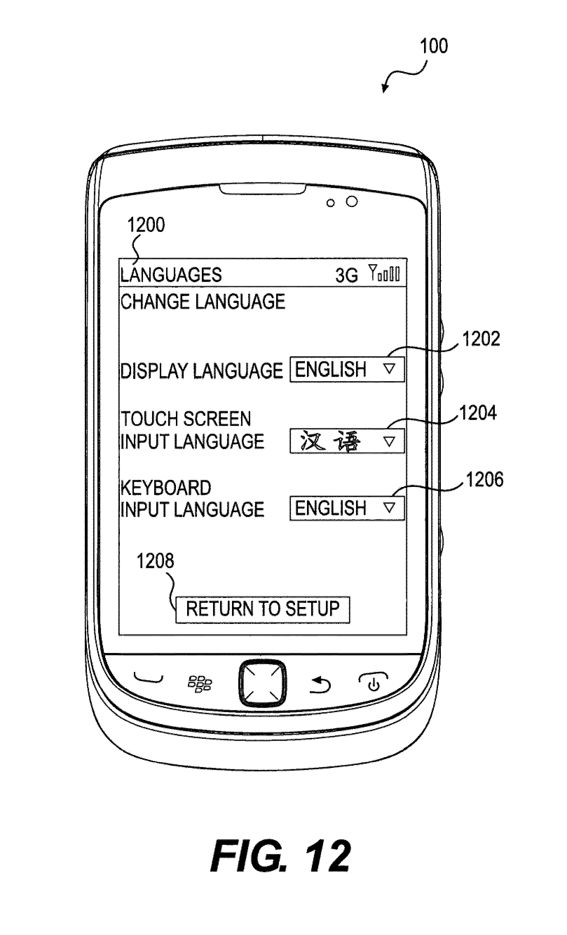

Upon displaying the options screen, a user may further select an option corresponding to "Languages and Input Methods," resulting in the example menu screen GUI 1200 shown in FIG. 12. Example menu screen GUI 1200 provides a number of options to a user for controlling language settings of portable electronic device 100. For example, a "Display language" menu option 1202 allows a user to control the display language of portable electronic device 100 via a drop-down menu. Additionally, a touchscreen input language option 1204 and a keyboard input language option 1206 are also provided as drop-down menus. Using options 1204 and 1206, a user can associate a particular language with touchscreen display 120, and can associate a different language with keyboard 138. Menu scrolling and selections can be made using input from accelerometer 140.

For example, in FIG. 12, a user has associated Simplified Chinese with touchscreen display 120, and has associated English with keyboard 138. Accordingly, when portable electronic device 100 is placed in the open position, a user may enter text input in both Simplified Chinese and English simultaneously without requiring cumbersome language mode changes of changing to Simplified Chinese, typing a Chinese character, and switching immediately back to English to type an English word.

Upon selecting the appropriate language options for each of the input devices, a user selects a "Return to Setup" option which causes portable electronic device 100 to save the language setting to memory 112.

In certain embodiments, the languages presented in options menus 1204 and 1206 depend on whether portable electronic device 100 is in the open or closed position. Additionally, in certain embodiments, options menu labels associated with options 1204 and 1206 change depending on the open or closed position of portable electronic device 100.

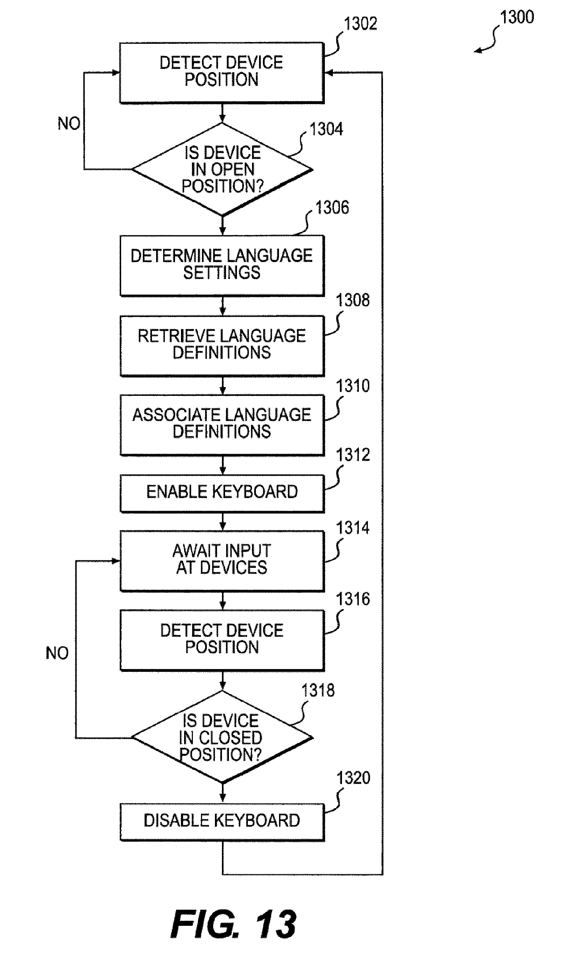

FIG. 13 is a flow diagram of an example method 1300 for enabling text input on portable electronic device 100. Using method 1300, a user may use both touchscreen display 120 and keyboard 138 for text input, where each text input is associated with a different language. The method described in connection with FIG. 13 is implemented by, for example, software programs 152 stored in persistent storage such as memory 112 and executed by processor 102 of portable electronic device 100.

Method 1300 begins at step 1302, where portable electronic device 100 detects an open or closed position of the device. At step 1304, if portable electronic device 100 determines that the device is in the closed position, the method returns to step 1302 to continue detecting the position of the device.

If portable electronic device 100 determines that the device is in the open position, method 1300 proceeds to step 1306, where portable electronic device 100 determines the language settings selected for each of touchscreen display 120 and keyboard 138 as dictated by menu options 1204 and 1206 of FIG. 12. Upon receiving the language settings, in step 1308, portable electronic device 100 retrieves language definitions from language database 154, and in step 1310, associates the retrieved language definitions with their associated input devices, as dictated by menu options 1204 and 1206.

For example, if a user selected Simplified Chinese in menu option 1204, and English for menu option 1206, then portable electronic device 100 retrieves the Simplified Chinese language definition and English definition from language database 154, associates the Simplified Chinese language definition with touchscreen display 120, and finally associates the English definition with keyboard 138, in accordance with the settings provided by menu options 1204 and 1206.

Next, in step 1312, portable electronic device 100 enables input from keyboard 138, and at step 1314, portable electronic device 100 is placed in a state to await text input from both touchscreen display 120 (via, for example, handwriting or by a virtual keyboard) as well as from keyboard 138. Additionally, the input devices have different languages associated with one another, and accordingly, portable electronic device 100 allows for text input in two separate languages at the same time, without requiring the user to change language modes to switch between languages.

In step 1316, portable electronic device 100 again detects the device position, and in step 1318, determines whether the device has been placed in the closed position. If portable electronic device 100 is still in the open position, method 1300 returns to step 1314 and continues to await text input from both input devices. However, if portable electronic device 100 determines that the device has been placed in the closed position, at step 13120, keyboard 138 is disabled for input, and method 1300 returns to step 1302 to detect a change in the device position.

It is to be appreciated that other example embodiments exist for controlling the selection of languages for the various input devices. For example, in an alternate embodiment, the functionality of icons displayed on touchscreen display 120 is changed depending on the closed or open positions of portable electronic device 100. For example, in one example embodiment, when the portable electronic device is in the closed position, a mode change icon (now shown) is presented on touchscreen display 120 allowing a user to quickly switch a language associated with touchscreen display 120 without requiring the user to enter the options application.

In another example embodiment, while portable electronic device 120 is in the closed position, a user selection of the mode change icon will present a list of all languages recognizable by handwriting. For example, a selection of the mode change icon will display a list of all Chinese handwriting languages recognized by portable electronic device 120. Additionally, in some embodiments, an "Other languages" option is provided, whereby if the user selects this option, the language list will be expanded to show all languages supported by touchscreen display 120.

However, if portable electronic device 100 is switched to the open position, the functionality of the mode change icon is modified to present only a listing of languages recognizable by handwriting, and does not provide a listing of other languages. Additionally, portable electronic device 100 presents an informative message to the user indicating that only languages recognizable by handwriting are displayed, and that other input languages are accessible by placing portable electronic device 100 in the closed position. Upon returning portable electronic device 100 to the closed position, the list of selectable languages is automatically updated to reflect all languages supported by touchscreen display 120.

Furthermore, it is to be appreciated that in certain embodiments, various keyboard combinations, entered either by keyboard 138 or by a virtual keyboard displayed on touchscreen display 120, are used to invoke the mode changing icon, thereby presenting the applicable language selection list based on the closed or open position of portable electronic device 100.

Additionally, in certain embodiments, a user assigns shortcut keys to a certain language. For example, in one embodiment, a user assigns "Alt + Enter" on keyboard 138 or the virtual keyboard of touchscreen display 120 to a particular language, and inputting of the shortcut will automatically re-associate the language assigned to the "Alt + Enter" shortcut with the input device that was used to enter the shortcut key. Alternatively, in a different embodiment, the shortcut assignment is always assigned to one input device in particular, or in yet another embodiment, the shortcut key changes both keyboard 138 and the virtual keyboard of touchscreen display 120 to be associated with languages associated with the shortcut key.

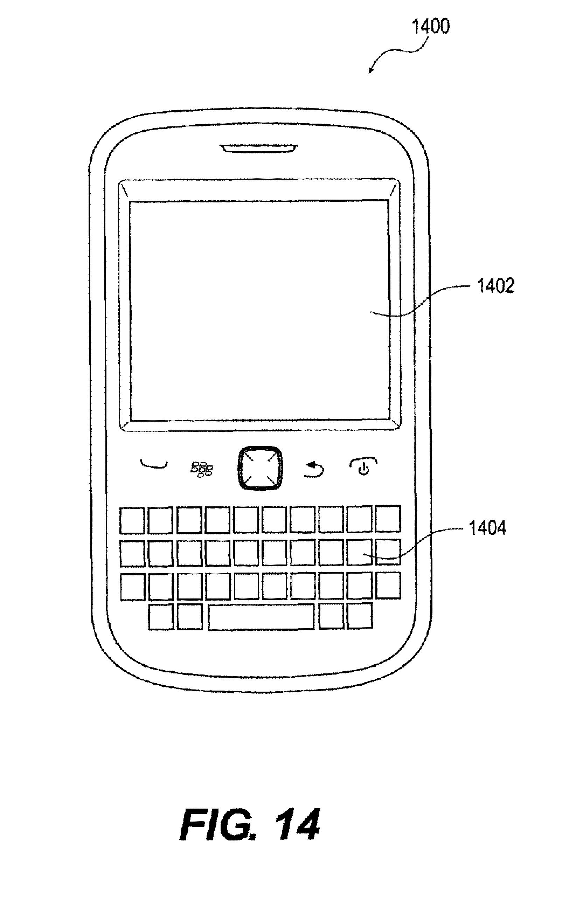

It is to be appreciated the above illustrations are only example of one embodiment, and in an alternate embodiment, portable electronic device 100 does not include a sliding portion. FIG. 14 illustrates generally therein an example portable electronic device 1400 according to an alternate embodiment. In FIG. 14, portable electronic device 1400 includes a touchscreen display 1402, which operates in a substantially similar fashion as touchscreen display 120. Additionally, portable electronic device 1400 includes keyboard 1404, which operates in a substantially similar fashion as keyboard 138. In particular, touchscreen display 1402 and keyboard 1404 are capable of being associated with different languages, allowing for text input in two separate languages at the same time, without requiring the user to change language modes to switch between languages. Furthermore, touchscreen display 1402 and keyboard 1404 are disposed together on a face or upper housing of portable electronic device 1400, with keyboard 1404 being on a base portion of the face or upper housing of the device. Furthermore, in this alternate embodiment, the portable electronic device 1400 does not include a sliding portion.

While the above description provides examples of one or more processes or apparatuses, it will be appreciated that other processes or apparatuses may be within the scope of the accompanying claims.

The foregoing description has been presented for purposes of illustration. It is not exhaustive and is not limited to the precise forms or embodiments disclosed. Modifications and adaptations of the embodiments will be apparent from consideration of the specification and practice of the disclosed embodiments. For example, the described implementations include hardware and software, but systems and methods consistent with the present disclosure may be implemented as hardware alone.

Computer programs based on the written description and methods of this specification are within the skill of a software developer. The various programs or program modules may be created using a variety of programming techniques. For example, program sections or program modules may be designed in or by means of Java, C, C++, assembly language, or any such programming languages. One or more of such software sections or modules may be integrated into a computer system or existing communications software.

Moreover, while illustrative embodiments have been described herein, the scope includes any and all embodiments having equivalent elements, modifications, omissions, combinations (e.g., of aspects across various embodiments), adaptations and/or alterations based on the present disclosure. The limitations in the claims are to be interpreted broadly based on the language employed in the claims and not limited to examples described in the present specification or during the prosecution of the application, which examples are to be construed as non-exclusive. Further, the steps of the disclosed methods may be modified in any manner, including by reordering steps and/or inserting or deleting steps. It is intended, therefore, that the specification and examples be considered as example only, with a true scope being indicated by the following claims and their full scope of equivalents.

## Claims

1. A method for enabling text input on a mobile device, the method comprising:
associating a first language with a first text input apparatus of the device;
associating a second language, different from the first language, with a second text input apparatus of the device; and
enabling text input from the first text input apparatus in the first language and from the second text input apparatus in the second language.

2. The method of claim 1, wherein enabling text input from the first text input apparatus in the first language further comprises selecting input from the first text input apparatus in the first language, the first text input apparatus associated with a touchscreen display of the mobile device.

3. The method of claim 2, wherein enabling text input from the first text input apparatus in the first language further comprises at least one of:
selecting input from the first text input apparatus in the first language, the first input apparatus associated with a virtual keyboard rendered on the touchscreen display; or
selecting input through handwriting on the touchscreen display.

4. The method of claim 2, wherein enabling text input from the second text input apparatus in the second language further comprises selecting input from the second text input apparatus in the second language, the second text input apparatus associated with a physical keyboard carried by a base portion of the mobile device.

5. The method of claim 4, wherein enabling text input from the first input apparatus and the second text input apparatus comprises:
detecting the touchscreen display of the mobile device being slid against the base portion of the mobile device from a closed position wherein the physical keyboard of the base portion is inaccessible, to an open position wherein the physical keyboard of the base portion is accessible; and
enabling text input from both the touchscreen display and the physical keyboard upon detecting the mobile device in the open position.

6. The method of claim 3, wherein when the input is selected from the virtual keyboard, the virtual keyboard is assigned a keyboard configuration selected from one of QWERTY, QWERTZ, AZERTY, or Dvorak Simplified Keyboard patterns.

7. A mobile device comprising:
a first text input apparatus of the mobile device associated with a first language;
a second text input apparatus of the mobile device associated with a second language different from the first language;
a memory storing instructions for processing of text input; and
a processor for executing the instructions to enable text input from the first text input apparatus in the first language and from the second text input apparatus in the second language.

8. The mobile device of claim 7, wherein the first text input apparatus is a touchscreen display of the mobile device.

9. The mobile device of claim 8, wherein the touchscreen display is adaptable to receive input through a virtual keyboard rendered on the touchscreen display or is adaptable to receive input through handwriting on the touchscreen display.

10. The mobile device of claim 7, wherein the second text input apparatus is a physical keyboard carried by a base portion of the mobile device.

11. The mobile device of claim 10, comprising executing, by the processor, instructions to:
detect the touchscreen display of the mobile device being slid against the base portion of the mobile device from a closed position wherein the physical keyboard of the base portion is inaccessible, to an open position wherein the physical keyboard of the base portion is accessible; and
enable text input from both the touchscreen display and the physical keyboard upon detecting the mobile device in the open position.

12. The mobile device of claim 8, wherein when the touchscreen display receives input through the virtual keyboard, the virtual keyboard is assigned a keyboard configuration selected from one of QWERTY, QWERTZ, AZERTY, or Dvorak Simplified Keyboard patterns.

13. A computer-readable storage medium storing instructions which, when executed by a processor of a mobile device, causes the mobile device to perform a method of any one of claims 1 to 6.
